# EUROPEAN PATENT APPLICATION

(11) **EP 2 617 608 A1**
(43) Date of publication of application: **24.07.2013**
(21) Application number: 12152166.0
(22) Date of filing: 23.01.2012
(51) Int. Cl.: B60R 21/36

(54) **Pedestrian airbag arrangement on a motor vehicle**

(71) Applicant: Autoliv Development AB, 447 83 Vårgårda (SE)
(72) Inventor: Kuntzsch, Stefan, SE-524 96 Ljung (SE)
(74) Representative: Parry, Simon James

(57) **Abstract**

There is disclosed a pedestrian safety arrangement on a motor vehicle (1) having a windscreen (3) and a roof (4), the safety arrangement comprising: an airbag arrangement (8) defining an inflatable volume for the receipt of inflating gas and which is initially provided in a package mounted to the structure (10, 22) of the vehicle in a position generally adjacent an upper edge (6) of the windscreen (3), the safety arrangement being **characterised in that** said airbag arrangement (8) is configured for deployment upon inflation so as to extend forwardly from said position over or across at least part of the windscreen (3) and also to extend rearwardly from said position over or across at least part of the roof (4).

## Description

The present invention relates to a safety arrangement on a motor vehicle, and more particularly relates to a pedestrian safety arrangement configured to provide protection to a pedestrian (or a cyclist) in the event of impact by the motor vehicle.

When a motor vehicle such as a motor car is involved in an accident in which the front part of the vehicle strikes a pedestrian or a cyclist, it is not uncommon for the head of the pedestrian or cyclist (hereinafter collectively referred to as "pedestrian") to be brought forcibly into contact with the hood or bonnet (hereinafter referred to as "hood") of the vehicle. This may cause the hood to deform, but in many cases that deformation is arrested as the hood engages part of the engine block, or other components within the engine compartment, immediately beneath the hood. As a consequence, the movement of the pedestrian's head is suddenly stopped, and the pedestrian's head is thus subjected to a very severe deceleration, which is undesirable.

It has therefore been proposed to provide one or more lifting devices located beneath a rear part of the hood, between the hood and the structure of the motor vehicle, and which are adapted to be actuated in an accident situation of the type described, so that the rear edge of the hood is lifted, thus spacing the hood from the underlying engine block and other components within the engine compartment. A safety arrangement of this type thus enables the head of a pedestrian, if it strikes the hood or bonnet in an accident, to be decelerated more gradually as the hood or bonnet deforms with reduced risk of the hood or bonnet impinging on the underlying engine block.

Conventional hood-lifting arrangements of the general type described above typically raise the rear part of the vehicle's hood through a fixed and relatively small range of movement from an initial position to an elevated position in which the rear part of the hood becomes positioned only a few centimetres (for example 10 cm) above its initial position. Whilst such arrangements generally serve their intended function of decelerating a pedestrian's head through deformation of the hood or bonnet, it has been found that in practice the pedestrian's body can slide over the hood and make potentially injurious contact with the windscreen of the vehicle. This is particularly likely in the event of a relatively high speed impact. It has therefore been proposed to provide such hood-lifting arrangements in combination with so-called pedestrian airbags which are arranged to inflate from beneath the raised rear part of the hood and to deploy over or across the windscreen to provide additional protection to a pedestrian who might otherwise strike the windscreen.

However, the available space beneath a typical motor vehicle hood is often very limited indeed which makes it difficult to accommodate a packaged airbag of sufficient size to deploy across the entire windscreen. It is therefore conventional for such pedestrian airbags to be configured for deployment over the lower region of the windscreen and the vehicle's A-pillars only, as these are generally considered to be the areas of the vehicle most likely to be struck by a pedestrian's head in the event that the pedestrian slides over or otherwise clears the hood in the event of an accident. However, such arrangements leave the upper edge of the windscreen where it meets the rigid structure of the vehicle's roof or (or strengthened windscreen frame in the case of a convertible or cabriolet vehicle) exposed. If the head of a pedestrian were to strike this area of the vehicle, it is likely that very serious injury would result.

It is a preferred object of the present invention to provide an improved pedestrian safety arrangement on a motor vehicle.

According to the present invention, there is provided a pedestrian safety arrangement on a motor vehicle having a windscreen and a roof, the safety arrangement comprising: an airbag arrangement defining an inflatable volume for the receipt of inflating gas and which is initially provided in a package mounted to the structure of the vehicle in a position generally adjacent an upper edge of the windscreen, the safety arrangement being **characterised in that** said airbag arrangement is configured for deployment upon inflation so as to extend forwardly from said position over or across at least part of the windscreen and also to extend rearwardly from said position over or across at least part of the roof.

The airbag package is preferably mounted to the structure of the vehicle in a position generally adjacent and behind the upper edge of the windscreen.

Preferably, said airbag arrangement comprises at least one airbag which is configured to extend both forwardly from said position over or across at least part of the windscreen and rearwardly from said position over or across at least part of the roof.

Advantageously, the or each said airbag comprises at least one front chamber arranged to deploy over or across at least part of the windscreen, and at least one rear chamber arranged to deploy over or across at least part of the roof.

Conveniently, the or each said airbag further comprises a central chamber in fluid communication with the or each front chamber and with the or each rear chamber.

Preferably, said airbag arrangement includes at least one front airbag configured for deployment upon inflation so as to extend forwardly from said position over or across at least part of the windscreen, and at least one rear airbag configured for deployment upon inflation so as to extend rearwardly from said position over or across at least part of the roof.

Advantageously, said airbag package is mounted to the roof structure of the motor vehicle.

Conveniently, said windscreen has a structural frame and said airbag package is mounted to the frame.

Preferably, said airbag package is initially provided behind a detachable cover which is releasably connected to said structure of the vehicle in an initial position and which is configured to detach from said structure upon inflation of the airbag and to move to a deployed position in which the cover is spaced from said structure with at least part of said inflated airbag being interposed between the cover and said structure.

Advantageously, said cover forms a detachable panel of the roof.

Conveniently, said cover forms a detachable panel of the frame.

Preferably, said cover is substantially rigid.

Advantageously, said cover extends transversely across the width of the vehicle.

Conveniently, said cover is tethered to said structure or said airbag via at least one tether, the or each tether being arranged to become tensioned as the cover moves during inflation of the airbag to thereby define said deployed position of the cover.

Preferably, said cover is affixed to a region of said airbag arrangement.

Advantageously, the safety arrangement is configured such that said central chamber becomes interposed between the cover and said structure of the vehicle upon deployment. So that the invention may be more readily understood, and so that further features thereof may be appreciated, embodiments of the invention will now be described by way of example with reference to the accompanying drawings in which:
Figure 1 is a schematic side view showing a motor vehicle equipped with a pedestrian safety arrangement in accordance with an embodiment of the present invention;
Figure 2 is a schematic view from above showing the motor vehicle and safety arrangement of figure 1;
Figure 3 is an enlarged cross-sectional view showing the structure of the vehicle at the top of its windscreen and at the front of its roof, showing the safety arrangement in an initial undeployed condition;
Figure 4 is a view corresponding generally to that of figure 3, but which shows the safety arrangement in a deployed condition;
Figure 5 is a schematic view from above, similar to that of figure 2, but which shows the safety arrangement in its deployed condition over part of the motor vehicle;
Figure 6 is a schematic view from the side, showing an arrangement in accordance with another embodiment in its deployed condition over part of the motor vehicle; and
Figure 7 is a view similar to that of figure 3, but which shows a safety arrangement in accordance with another embodiment, as may be installed on a convertible motor vehicle.

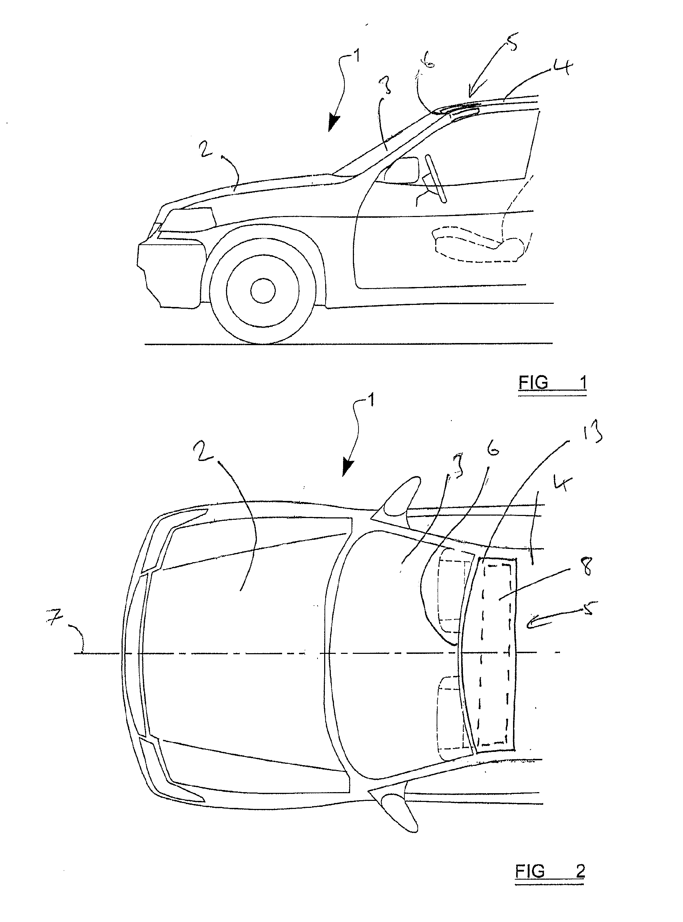

Referring initially to figures 1 and 2, there is illustrated the front part of a motor vehicle 1 having a hood 2, a windscreen 3 and a roof 4. The vehicle is fitted with a safety arrangement in accordance with the present invention comprising an airbag module 5. The airbag module 5 is provided as an integral unit and is located generally adjacent and immediately behind the upper edge 6 of the windscreen relative to the normal driving direction of the vehicle. The safety arrangement is illustrated in figures 1 and 2 as having a generally elongate configuration across the width of the vehicle, so as to extend substantially along the length of the upper edge 6 of the windscreen 3.

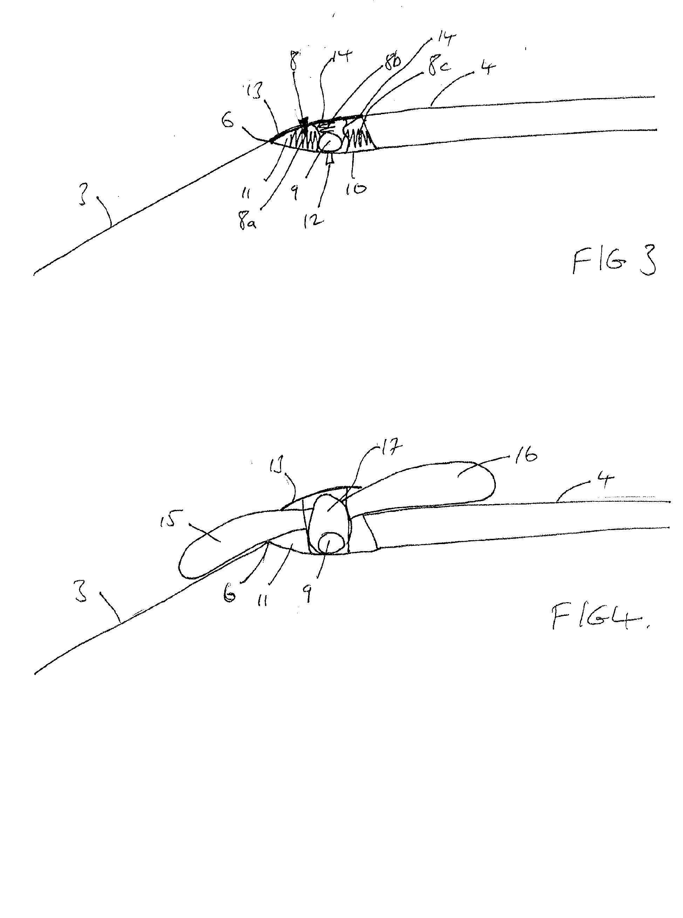

Figure 3 illustrates the safety arrangement in cross-sectional view, the section being taken along the longitudinal axis 7 of the vehicle. The airbag module 5 comprises an inflatable airbag 8 and an associated inflator 9 such as a gas generator of a type known *per se.* The inflator 9 is provided in fluid communication with the inflatable volume of the airbag 8 in a known manner and is fixedly secured to the structure 10 of the vehicle's roof 4, for example via fixing bolts or the like. In the particular arrangement illustrated, the inflator 9 and the airbag 8 are both provided within a compartment or cavity 11 formed within the roof structure of the vehicle and which extends transversely across the front region of the roof, adjacent and behind the upper edge 6 of the windscreen 3.

The airbag 10 is initially tightly rolled and/or folded into a package which is accommodated within the compartment or cavity 11. In the particular embodiment illustrated, and as will be described in more detail below, the airbag 8 comprises three discrete chambers which are provided in fluid communication with one another, and each chamber is shown in figure 3 as being folded and/or rolled into a respective sub-package, namely front sub-package 8a, central sub-package 8b, and rear sub-package 8c.

The inflator 9 is preferably provided inside the inflatable volume of the airbag and fixed to the roof structure 10 via mounting bolts 12 which pass through respective apertures formed in the fabric of the airbag 8. The airbag package is thus effectively mounted to the structure 10 of the roof 4 adjacent and behind the upper edge 6 of the windscreen.

The compartment or cavity 11 is initially closed by a detachable cover 13 which is releasably connected to the roof structure 10, for example via breakable connecting bolts or tabs (not shown). The cover 13 is preferably substantially rigid and extends across substantially the full width of the roof 4 as shown most clearly in figure 2. As illustrated in figure 3, the cover is slightly curved in the front-rear direction of the vehicle and in this way is configured to conform to the external profile of the roof 4. The cover 13 thus effectively forms a detachable panel of the roof.

The cover 13 is preferably tethered to the roof structure 10 via a number of flexible tethers, which may, for example, extend from the undersurface of the cover, downwardly across the cavity or compartment 11 to the underlying region of the roof structure 10 at the ends of the airbag 8 so as not to foul the airbag 8. As shown in figure 3, in the undeployed configuration of the safety arrangement, the tethers 14 hang loose, each being longer than the initial distance between the cover 13 and the part of the structure 10 to which the tethers are anchored.

Upon receipt of an actuation signal from a crash sensor (not shown) indicative of an actual or likely impact between the vehicle 1 and a pedestrian, the inflator 9 is actuated so as to direct a large volume of inflating gas rapidly into the airbag 8. The airbag 8 thus rapidly inflates from its initial packaged condition, and in so doing exerts considerable outward pressure on the undersurface of the cover 13. The cover 13 is thus caused to detach from the structure of the roof 4 (e.g. via rupture of the breakable connecting bolts or tabs), thereby opening the cavity or compartment 11 and allowing the inflating airbag to develop and deploy outwardly from the cavity or compartment 11. As shown in figure 4, the three sub-packages 8a, 8b, 8c of the packaged airbag develop into respective chambers as the airbag inflates. In particular, it will be noted that the front sub-package 8a defines a front chamber 15 which inflates so as to deploy forwardly over or across the upper region of the windscreen 3. The rear sub-package 8c defines a rear chamber 16 which inflates so as to deploy rearwardly over or across the front region of the roof 4. The central package 8b defines a central chamber 17 which inflates beneath the cover 13 and which is the main part of the airbag 8 which drives the cover 13 upwardly as the airbag inflates. Furthermore, it will be noted that the inflator 9 is actually provided inside the central chamber 17 and so upon actuation of the inflator the inflating gas will be fed directly into the central chamber 17. The central chamber 17 is thus the first to develop from its folded package towards its inflated configuration. The front and rear chambers 15, 16 are each provided in fluid communication with the central chamber 17 and thus receive flows of inflating gas from the central chamber 17 and begin develop shortly after the central chamber 17.

As illustrated in figure 4, in the deployed configuration of the safety arrangement, the inflated airbag 8 (and in particular the central chamber 17 of the airbag) has urged the cover 13 from its initial position as illustrated in figure 3 to a deployed position in which it is spaced from the underlying roof structure 10, with the central chamber 17 and adjacent regions of the front and rear chambers 15, 16 being interposed between the cover 13 and the structure 10. The distance by which the cover 13 becomes spaced from the structure 10 upon inflation of the airbag is defined by the length of the tethers 14, because of course as the tethers 14 draw tight between the cover and the underlying structure as shown in figure 4 they will prevent further movement of the cover away from the structure.

With reference to figure 4, it is to be noted that the above-described safety arrangement offers several significant advantages. Firstly, it will be noted that the airbag 8 inflates so as to cover upper edge region of the windscreen 3, which represents a high-risk area of the vehicle for impact by a pedestrian. Secondly, it will be noted that the airbag 8 also inflates rearwardly so as to cover the front region of the vehicle's roof 4, thereby offering additional protection to a pedestrian in the event that the pedestrian is stuck with such force that he or she is lifted over or slides across the windscreen and onto the front region of the roof. Thirdly, it will be noted that the cover 13, being elongate in the transverse direction of the vehicle, substantially rigid, and spaced from the rigid parts of the roof structure 10 by the inflated airbag 8 in its deployed position, serves to spread the impact force resulting from impact with a pedestrian across substantially the full width of the airbag 8. The cover 13 thus serves as a load distributing member and helps to significantly improve the energy absorption characteristic of the airbag 8 by spreading the impact load across the width of the airbag, thereby avoiding localised concentration of the impact forces on the airbag. This reduces the risk of the pedestrian striking through the airbag and making forceful contact with the structure 10 beneath.

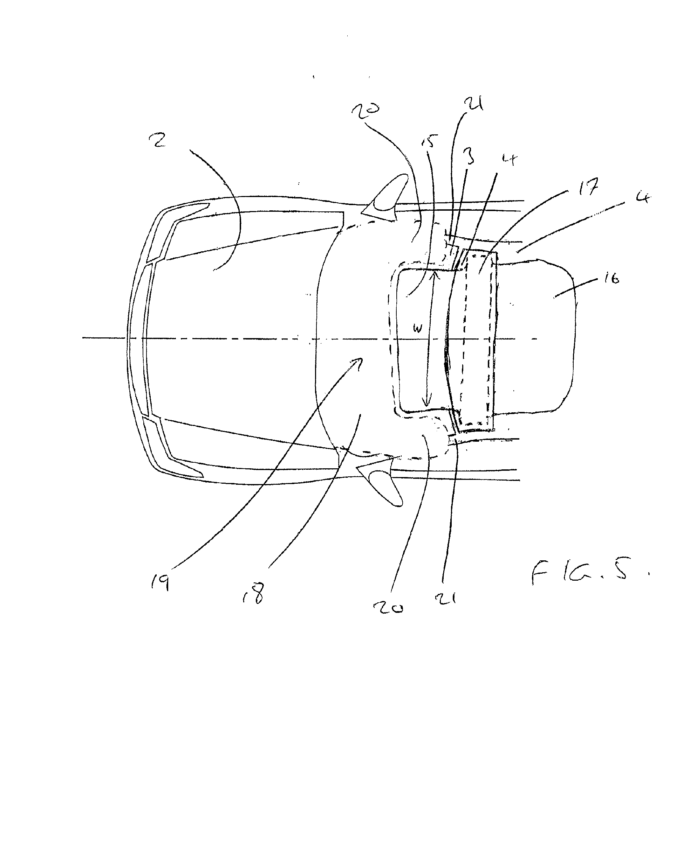

Turning now to consider figure 5, an embodiment of the safety arrangement 5 is illustrated from above in its deployed condition in which the front chamber 15 is deployed over the upper region of the vehicle's windscreen 3 and the rear chamber 16 is deployed across the front part of the vehicle's roof 4. It is to be noted in particular that in this embodiment the front chamber 15 is configured so as to have a width w in the transverse direction of the vehicle which is slightly less than the full width of the windscreen 3. Furthermore, it is to be noted that the vehicle 1 shown in figure 5 is also fitted with another pedestrian airbag 18 of a more conventional configuration which is shown in its deployed configuration following inflation from beneath the rear part of the vehicle's hood 2. Accordingly, the additional airbag 18 deploys over the lower region of the windscreen 3. More particularly, it will be noted that the additional, lower, airbag 18 is configured so as to have a generally U-shaped form in its inflated condition, and thus defines a main transverse region 19 extending across the lower part of the windscreen 3, and a pair of spaced-apart limbs 20 which are arranged to deploy over respective A-pillars 21 of the vehicle. The airbag 8 of the roof-mounted safety arrangement 5 is configured to co-operate with the airbag 18 of the under-hood mounted arrangement so as to inflate between the two spaced-apart limbs 20, the two airbags thus fitting together in the manner of a pair of jigsaw pieces. The two airbags 8, 18 are intended to inflate simultaneously and thus co-operate to cover substantially the entire windscreen 3 between them.

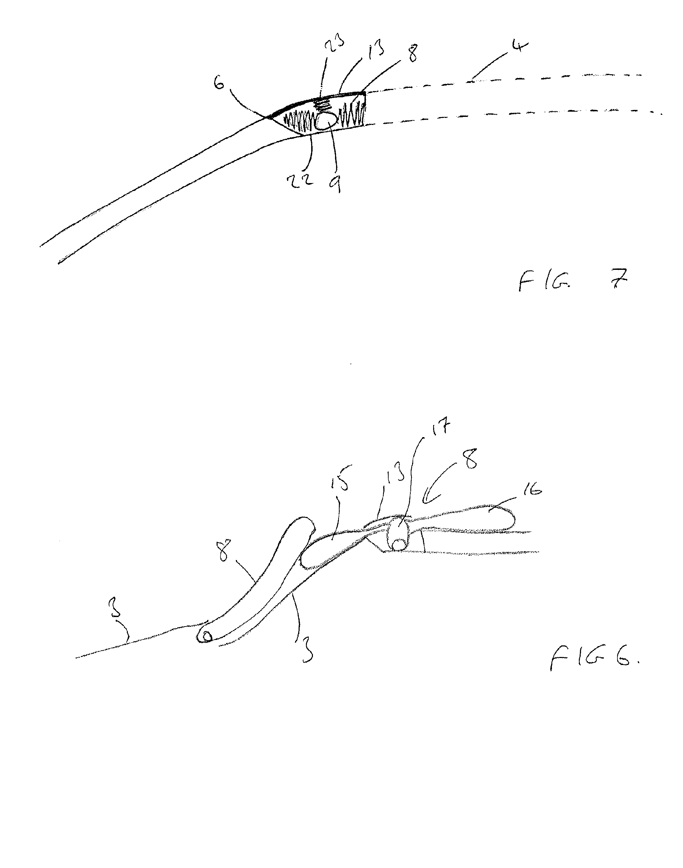

However, figure 6 illustrates in side view another proposal for the cooperation of the roof-mounted airbag 8 with the additional airbag 18. In this arrangement, rather than fitting together like jigsaw pieces, the two airbags 8, 18 are designed to overlap one another. In the particular arrangement illustrated, the front chamber 15 of the roof-mounted airbag is arranged to deploy over the full width of the upper part of the windscreen, and the additional airbag 18, which is arranged to inflate upwardly from beneath the raised hood 3 is arranged to lie over the roof bag 8 in its upper region. This is achieved by configuring the two airbags such that the additional airbag 18 reaches its fully deployed configuration as illustrated after the roof bag 8 reaches its fully deployed configuration. This is relatively straightforward in most installations because the additional airbag 18 will generally be significantly larger in volume than the roof bag, and will thus take longer to fully inflate.

As will be noted from figure 6, with the two airbags 8, 18 overlapped in this manner, the effective thickness inflated cushion provided to a pedestrian in the region of the overlap is considerably increased. For example, an arrangement may have a roof airbag which inflates to a thickness of approximately 100mm, and an additional airbag 18 which also inflates to a thickness of 100mm, in which case the airbags would combine to give an effective thickness of 200mm in their overlapped regions.

Whilst figure 6 shows the two airbags 8, 18 overlapped such that the additional airbag 18 rests over and against the roof bag 8, the reverse situation could also be used in which inflation of the roof bag 8 is retarded relative to the additional airbag 18 such that the roof bag 8 instead rests over and against the additional bag 18. However, such an arrangement is currently considered less preferable to the one illustrated in figure 6 as it might be possible for a pedestrian to move between the two airbags.

Turning now to consider figure 7, there is illustrated another embodiment of the present invention, which represents a variation of the arrangement described above and illustrated in figures 1 to 5. Accordingly, the same reference numerals are used in figure 6 to denote similar or identical components.

In particular, it is to be noted that the safety arrangement of figure 7 is shown installed adjacent the upper edge 6 of the windscreen 3 of a convertible or cabriolet car. In such a vehicle, the roof 4 (which may either be solid and formed of metal, or flexible and formed of fabric) is arranged to fold-down and is thus arranged to disengage from the upper region of a structural frame 22 provided around the windscreen 3. Accordingly, on such a vehicle it is inappropriate to mount the safety arrangement to the structure of the roof 4, and so instead it is mounted the structure 22 of the windscreen frame.

More particularly, in the arrangement illustrated in figure 7, the airbag 8 and the inflator 9 are provided within a cavity 11 which is formed in the upper region of the structural frame 22, and which is initially closed by the detachable cover 13 in substantially the same manner as in the previously described embodiment. The cover 13 thus forms a detachable panel of the frame 22. Accordingly, when the roof 4 is folded down, away from the frame 22, all the components of the safety arrangement remain unaffected and in position ready for actuation in a substantially identical manner to the previously described embodiment. As will be appreciated, in the event that the safety arrangement is actuated when the roof 4 is raised and in its normal, closed, position as shown in phantom in figure 4, the rear chamber 16 of the airbag 8 will be deployed across the front part of the vehicle's roof 4 in exactly the same manner as described previously in connection with the embodiment of figures 1 to 5. However, in the event that the safety arrangement is actuated whilst the roof 4 is in its open, lowered, position (not shown), it is proposed that the rear chamber 16 of the inflated airbag will still provide effective protection to a pedestrian, and also against possible injury to the occupants of the vehicle in the event of a roll-over type accident, by extending over the heads of the front-seat occupants of the vehicle and via support from the headrests of the vehicle's front seats and/or other parts of the vehicle's structure (such as, for example, a roll-over bar of hoop which could be raised from an initial position upon actuation of the safety arrangement).

The arrangement of figure 7 is shown to exclude the tethers 14 of the embodiment described above with reference to figures 1 to 5. Instead, in this arrangement the cover 13 is fixedly attached, at 23, to the fabric of the central sub-package 8b across the width of the airbag. Accordingly, when the airbag 8 inflates and the central chamber develops from the sub-package 8b, the cover 13 is retained in position above the central chamber. Of course, it is to be appreciated that this modification could also be made to the embodiment of figures 1 to 5, and also the embodiment of figure 6 could instead be provided with the tether arrangement of the previous embodiment.

Whilst the invention has been described above with reference to particular embodiments, it is to be appreciated that various modifications could be made without departing from the scope of the claimed invention. For example, whilst the embodiments described above comprise a single airbag with multiple chambers, it is to be appreciated than variants of the invention could comprise a plurality of airbags. For example, such an arrangement could comprise a plurality of individual airbags arranged either to inflate simultaneously or in sequence. Furthermore, the airbags could each comprise front, central and rear chambers in a similar manner to the embodiments described above, or could instead be configured such that each individual airbag deploys to serve the function of the chambers described above. For example, such an arrangement could include at least one front airbag configured for deployment upon inflation so as to extend forwardly over or across at least part of the windscreen, and at least one rear airbag configured for deployment upon inflation so as to extend rearwardly from said position over or across at least part of the roof. Another central airbag could be provided for inflation beneath the detachable cover.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. A pedestrian safety arrangement on a motor vehicle (1) having a windscreen (3) and a roof (4), the safety arrangement comprising: an airbag arrangement (8) defining an inflatable volume for the receipt of inflating gas and which is initially provided in a package mounted to the structure (10, 22) of the vehicle in a position generally adjacent an upper edge (6) of the windscreen (3), the safety arrangement being **characterised in that** said airbag arrangement (8) is configured for deployment upon inflation so as to extend forwardly from said position over or across at least part of the windscreen (3) and also to extend rearwardly from said position over or across at least part of the roof (4).

2. A pedestrian safety arrangement on a motor vehicle according to claim 1, wherein said airbag arrangement comprises at least one airbag (8) which is configured to extend both forwardly from said position over or across at least part of the windscreen (3) and rearwardly from said position over or across at least part of the roof (4).

3. A pedestrian safety arrangement on a motor vehicle according to claim 2, wherein the or each said airbag (8) comprises at least one front chamber (15) arranged to deploy over or across at least part of the windscreen (3), and at least one rear chamber (16) arranged to deploy over or across at least part of the roof (4).

4. A pedestrian safety arrangement according to claim 3, wherein the or each said airbag (8) further comprises a central chamber (17) in fluid communication with the or each front chamber (15) and with the or each rear chamber (16).

5. A pedestrian safety arrangement on a motor vehicle according to claim 1, wherein said airbag arrangement includes at least one front airbag configured for deployment upon inflation so as to extend forwardly from said position over or across at least part of the windscreen (3), and at least one rear airbag configured for deployment upon inflation so as to extend rearwardly from said position over or across at least part of the roof (4).

6. A pedestrian safety arrangement on a motor vehicle according to any preceding claim, wherein said airbag package 8 is mounted to the roof structure (10) of the motor vehicle (1).

7. A pedestrian safety arrangement on a motor vehicle according to any one of claims 1 to 4, wherein said windscreen (3) has a structural frame (22) and said airbag package is mounted to the frame (22).

8. A pedestrian safety arrangement on a motor vehicle according to any preceding claim, wherein said airbag package (8) is initially provided behind a detachable cover (13) which is releasably connected to said structure (10, 22) of the vehicle in an initial position and which is configured to detach from said structure (10, 22) upon inflation of the airbag and to move to a deployed position in which the cover (13) is spaced from said structure (10, 22) with at least part (17) of said inflated airbag (8) being interposed between the cover (13) and said structure (10, 22).

9. A pedestrian safety arrangement according to claim 8 as dependent upon claim 6, wherein said cover (13) forms a detachable panel of the roof (4).

10. A pedestrian safety arrangement according to claim 8 as dependent upon claim 7, wherein said cover (13) forms a detachable panel of the frame (22).

11. A pedestrian safety arrangement on a motor vehicle according to any one of claims 8 to 10, wherein said cover (13) is substantially rigid.

12. A pedestrian safety arrangement on a motor vehicle according to any one of claims 8 to 11, wherein said cover (13) extends transversely across the width of the vehicle.

13. A pedestrian safety arrangement on a motor vehicle according to any one of claims 8 to 12, wherein said cover (13) is tethered to said structure (10, 22) or said airbag via at least one tether (14), the or each tether (14) being arranged to become tensioned as the cover (13) moves during inflation of the airbag (8) to thereby define said deployed position of the cover (13).

14. A pedestrian safety arrangement on a motor vehicle according to any one of claims 8 to 13, wherein said cover (13) is affixed to a region (23) of said airbag arrangement (8).

15. A pedestrian safety arrangement on a motor vehicle according to any one of claims 8 to 14 as dependent upon claim 4, configured such that said central chamber (17) becomes interposed between the cover (13) and said structure (10, 22) of the vehicle upon deployment.
